# EUROPEAN PATENT APPLICATION

(11) **EP 4 052 835 A1**
(43) Date of publication of application: **07.09.2022**
(21) Application number: 22157070.8
(22) Date of filing: 16.02.2022
(51) Int. Cl.: B23K 10/00, B23K 9/10

(54) **RECONFIGURABLE NETWORKED ENERGY STORAGE MODULE FOR UTILITY POWER SAVINGS IN A WELDING OR CUTTING MACHINE**

(30) Priority: 17.02.2021 US 202117177384
(71) Applicant: Lincoln Global, Inc., Santa Fe Springs, CA 90670 (US)
(72) Inventor: KRUEGER, Matthew J., Medina, 44256 (US); MATTHEWS, William T., Chesterland, 44026 (US); KOOKEN, Todd E., Solon, 44139 (US)
(74) Representative: Hoyng Rokh Monegier B.V.

(57) **Abstract**

An energy storage module (ESM) is provided for connecting to a welding or cutting machine (WCM). The ESM has a controller for connecting to a communication link (CM) to communicate with the WCM when the ESM is connected to the WCM. The ESM also has a battery pack to store electrical energy and output DC electrical power to be used by the WCM, under control of the controller. Electrical input power provided to the WCM from an electrical grid or a renewable energy source during a welding or cutting operation can be supplemented or replaced by the DC electrical power from the ESM. The ESM further has regulation circuitry to regulate the DC electrical power output from the battery pack. The controller controls the regulation circuitry based on identification data received over the CM from the WCM to regulate the DC electrical power to be electrically compatible with the WCM.

## Description

### CROSS REFERENCE TO RELATED APPLICATION/INCORPORATION BY

### REFERENCE

U.S. Patent No. 7,208,697 issued on April 24, 2007 is incorporated herein by reference in its entirety. U.S. Patent No. 6,486,439 issued on November 26, 2002 is incorporated herein by reference in its entirety. U.S. Patent No. 6,624,388 issued on September 23, 2003 is incorporated herein by reference in its entirety. U.S. Patent No. 5,257,006 issued on October 26, 1993 is incorporated herein by reference in its entirety. U.S. Patent No. 9,855,620 issued on January 2, 2018 is incorporated herein by reference in its entirety. U.S. Patent No. 10,668,551 issued on June 2, 2020 is incorporated herein by reference in its entirety. U.S. Patent No. 10,471,532 issued on November 12, 2019 is incorporated herein by reference in its entirety.

### FIELD

Embodiments of the present invention relate to energy storage modules. More specifically, embodiments of the present invention relate to reconfigurable and networked energy storage modules for utility power savings of welding or cutting machines.

### BACKGROUND

Energy prices are rising as demand for electricity continues to increase, especially as electric vehicles become more prominent. Distributed, renewable energy sources have not matured enough in the market or served to offset the increasing demand. Utility electrical grid infrastructure is old and outdated and distributed sources of energy have not reached mature adoption. Significant charges are levied on industrial energy customers by utility companies for both usage (kilo-watt hours) and peak demand (kilowatts). Significant savings can be realized by changing what time of day energy is consumed (energy shifting). Energy use charge rates can vary (e.g., by 400%) between peak and off-peak hours. Peak shaving, or reducing the peak demand, can save significant money and reduce the stress on the grid. Peak shaving is a technique in which energy is stored and later used to reduce energy demand during peak hours. The stored energy is used to supplement energy consumed from the utility mains. Significant cost savings can be realized by using energy during off-peak hours and reducing the peak demand required. As renewable sources of energy arrive in the marketplace, energy can be returned to the grid. Similarly, unused energy can be returned to the grid if it is known about and can be accessed. Energy costs of operating a welding or cutting machine can be significant as utility companies charge for both energy usage and peak energy demand. Utility companies may also begin charging for backup capacity required as the electrical grid shifts from a hub and spoke system to a networked architecture.

### SUMMARY

One embodiment is an energy storage module for connecting to a welding machine or a cutting machine. The energy storage module includes a controller configured to be operatively connected to a communication link to communicate with the welding machine or the cutting machine via the communication link when the welding machine or the cutting machine is operatively connected to the energy storage module. The energy storage module also includes a battery pack configured to store electrical energy and output direct current (DC) electrical power to be used by the welding machine or the cutting machine, under control of the controller. In this way, electrical input power provided to the welding machine or the cutting machine from an electrical grid (e.g., a utility electrical grid) or a renewable energy source during a welding operation or a cutting operation can be supplemented or replaced by the DC electrical power from the energy storage module. The energy storage module further includes regulation circuitry configured to regulate the DC electrical power output from the battery pack. The controller is configured to control the regulation circuitry based on, at least in part, identification data received over the communication link from the welding machine or the cutting machine to regulate the DC electrical power to be compatible with the welding machine or the cutting machine operatively connected to the energy storage module. In one embodiment, the energy storage module includes battery charging circuitry configured to accept the electrical input power from the electrical grid or the renewable energy source and provide the electrical energy to the battery pack, under control of the controller, to charge the battery pack. In one embodiment, the energy storage module includes inverter circuitry configured to accept the electrical energy stored in the battery pack and convert the electrical energy to grid electrical power, under control of the controller, where the grid electrical power can be provided back to the electrical grid. In one embodiment, the controller is configured to communicate with the welding machine or the cutting machine over the communication link via a wired digital communication technique. In one embodiment, the controller is configured to communicate with the welding machine or the cutting machine over the communication link via a wireless digital communication technique. In one embodiment, the controller is configured to communicate with the welding machine or the cutting machine over the communication link via a wired analog communication technique. In one embodiment, the communication link includes electrical power cables operatively connected between the energy storage device and the welding machine or the cutting machine. In one embodiment, the communication link includes a computer-based communication network. In one embodiment, the energy storage module also includes a positive direct current (DC) output power connector and a negative direct current (DC) output power connector configured to be connected to respective direct current (DC) power cables to operatively connect to respective power connectors on the welding machine or the cutting machine. In one embodiment, the energy storage module also includes an alternating current (AC) input power connector configured to connect to the electrical grid or the renewable energy source. In one embodiment, the energy storage module also includes an alternating current (AC) output power connector configured to connect to the welding machine or the cutting machine. In one embodiment, the regulation circuitry is configured to regulate the direct current (DC) electrical power to be compatible with the welding machine or the cutting machine at least by establishing a power limit associated with the welding machine or the cutting machine.

One embodiment is a welding system. The welding system includes a welding power source configured to provide welding output power during a welding operation. The welding system also includes an energy storage module configured to be operatively connected to the welding power source. The energy storage module includes a controller configured to be operatively connected to a communication link to communicate with the welding power source via the communication link when the welding power source is operatively connected to the energy storage module. The energy storage module also includes a battery pack configured to store electrical energy and output direct current (DC) electrical power to be used by the welding power source, under control of the controller. In this manner, electrical input power provided to the welding power source from an electrical grid (e.g., an utility electrical grid) or a renewable energy source during the welding operation can be supplemented or replaced by the DC electrical power. The energy storage module further includes regulation circuitry configured to regulate the direct current (DC) electrical power output from the battery pack. The controller is configured to control the regulation circuitry based on, at least in part, identification data received over the communication link from the welding power source to regulate the direct current (DC) electrical power to be compatible with the welding power source operatively connected to the energy storage module. In one embodiment, the energy storage module also includes battery charging circuitry configured to accept the electrical input power from the electrical grid or the renewable energy source and provide the electrical energy to the battery pack, under control of the controller, to charge the battery pack. In one embodiment, the energy storage module further includes inverter circuitry configured to accept the electrical energy stored in the battery pack and convert the electrical energy to grid electrical power, under control of the controller, where the grid electrical power can be provided back to the electrical grid. In one embodiment, the welding power source and the energy storage module are configured to communicate over the communication link via at least one of a wired digital communication technique, a wireless digital communication technique, or a wired analog communication technique. In one embodiment, the welding system also includes a positive direct current (DC) power cable and a negative direct current (DC) power cable configured to be connected between the energy storage module and the welding power source to provide the direct current (DC) electrical power from the energy storage module to the welding power source. In one embodiment, the welding system also includes an alternating current (AC) input power cable configured to connect the energy storage module to the electrical grid or the renewable energy source. In one embodiment, the welding system also includes an alternating current (AC) output power cable configured to connect the energy storage module to the welding power source to provide alternating current (AC) input power from the energy storage module to the welding power source. In one embodiment, the regulation circuitry of the energy storage module is configured to regulate the direct current (DC) electrical power to be compatible with the welding power source at least by establishing a power limit associated with the welding power source.

Numerous aspects of the general inventive concepts will become readily apparent from the following detailed description of exemplary embodiments, from the claims, and from the accompanying drawings.

### BRIEF DESCRIPTION OF THE DRAWINGS

The accompanying drawings, which are incorporated in and constitute a part of the specification, illustrate various embodiments of the disclosure. It will be appreciated that the illustrated element boundaries (e.g., boxes, groups of boxes, or other shapes) in the figures represent one embodiment of boundaries. In some embodiments, one element may be designed as multiple elements or that multiple elements may be designed as one element. In some embodiments, an element shown as an internal component of another element may be implemented as an external component and vice versa. Furthermore, elements may not be drawn to scale.
FIG. 1 illustrates a first view of one embodiment of a welding system having an energy storage module (ESM) operatively connected to a welding power source;
FIG. 2 illustrates a second view of the welding system of FIG. 1;
FIG. 3 illustrates a schematic block diagram of one embodiment of the welding system of FIG. 1 and FIG. 2 having one embodiment of the energy storage module (ESM) of FIG. 1 and FIG. 2 operatively connected to one embodiment of the welding power source of FIG. 1 and FIG. 2;
FIG. 4 illustrates a schematic block diagram of one embodiment of the energy storage module (ESM) of FIGS. 1-3;
FIG. 5 illustrates a schematic diagram of a networked configuration of multiple welding systems each having a welding power source and a corresponding energy storage module (ESM); and
FIG. 6 illustrates a block diagram of an example embodiment of a controller that can be used in the welding power source of FIGS. 1-3 and/or the energy storage module (ESM) of FIGS. 1-4.

### DETAILED DESCRIPTION

Embodiments of the present invention include welding or cutting systems each having an energy storage module (ESM) that can be operatively connected to a given welding or cutting power source to provide supplemental or replacement electrical power to the welding or cutting power source during a welding or cutting operation. In one embodiment, the ESM is a module accessory intended to provide energy storage for the reduction of peak demand energy consumed by a welding or cutting power source. With reduced energy drawn from the main input power lines, the input current rating on the welding or cutting systems will be reduced. This allows for more welding or cutting power sources to be installed on a given power distribution network, for example, in a factory, a plant, or some other type of facility.

For example, in one embodiment, the ESM is an intelligent module that can leverage a power supply in a welding or cutting power source (e.g., the 100 Volt secondary power supply in the Lincoln Electric S-series Power Wave products) for integration of a battery pack to supplement welding power. Similarly, in one embodiment, integrated control electronics can be leveraged to both measure and control the welding or cutting power output as well as power factor correction of the input power. Fully integrated control of both the input and output power of the welding or cutting power source with the ESM allows the welding or cutting system to act as its own power meter and control device.

The ESM module can be networked and integrated with enterprise level software and IT solutions for controlling, scheduling, predicting, and modifying welding or cutting operations and the use of supplemental power during times of peak energy consumption. Networking technologies may include, for example, power line communication, ArcLink communication, Ethernet, and wireless communication. Similarly, the integration of software control of the power sources and ESMs allow for adjustment of how supplemental power is delivered from the ESM based on utility conditions and welding or cutting output requirements. Idle power sources with extra energy in their associated ESMs can be used to return energy to the utility electrical grid or industrial network during peak energy consumption times while other power sources are welding or cutting. Thus, industrial customers can realize a reduction in total energy consumption through the coordinated operation of all welding or cutting power sources and associated ESMs. The same electronics used for welding or cutting can also be used to control the return of energy to the electrical grid during idle times, in accordance with one embodiment.

In one embodiment, an ESM is configured for peak demand shaving applications. In another embodiment, an ESM is configured to store large amounts of energy, drawn during off-peak hours, for use during peak hours, thus reducing the energy use charges. Energy storage technology can range from lithium ion batteries, super capacitors to lithium ion capacitors, in accordance with some embodiments. Other existing energy storage technologies are possible as well. Energy storage technology not developed as of yet may also be leveraged by an ESM in the future.

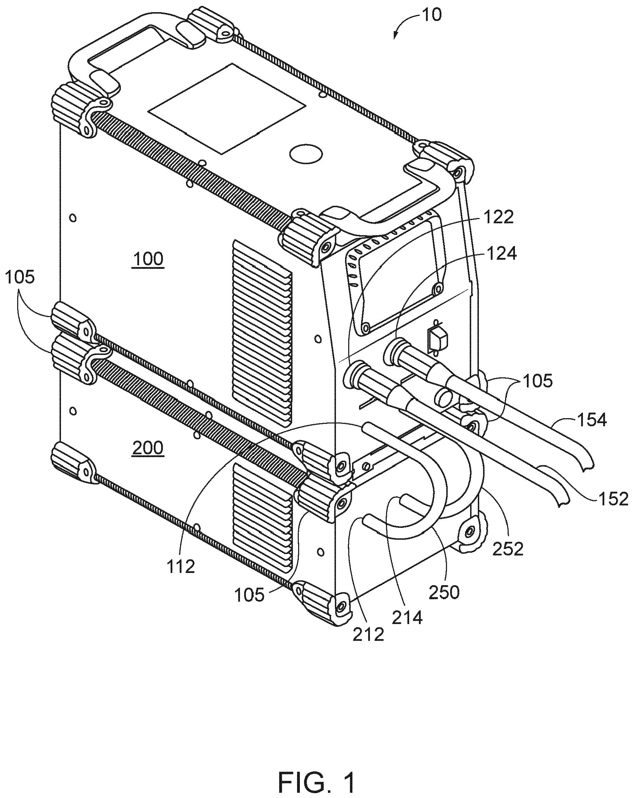

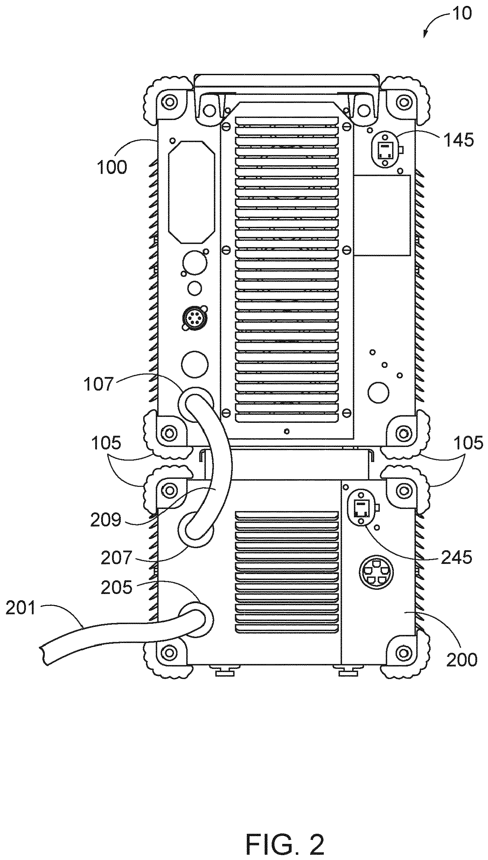

The examples and figures herein are illustrative only and are not meant to limit the subject invention, which is measured by the scope and spirit of the claims. Referring now to the drawings, wherein the showings are for the purpose of illustrating exemplary embodiments of the subject invention only and not for the purpose of limiting same, FIG. 1 illustrates a first view of one embodiment of a welding system 10 having an energy storage module (ESM) 200 operatively connected to a welding power source 100. FIG. 2 illustrates a second view of the welding system 10 of FIG. 1. The welding power source 100 may provide, for example, one or more arc welding modes for welding metal. In an alternative embodiment, the welding power source 100 may instead be a cutting machine providing, for example, one or more plasma cutting modes for cutting metal. For sake of brevity, the discussions herein will focus on welding instead of cutting, although one skilled in the art will understand how various aspects described herein can be applied to cutting.

Referring to FIG. 1 and FIG. 2, the ESM 200 is positioned below the welding power source 100. In one embodiment, the bottom portion of the welding power source 100 is configured to rest on the top portion of the ESM 200. For example, in one embodiment, the bottom portion of the welding power source 100 and the top portion of the ESM 200 may include a configuration of ridges and grooves, allowing the welding power source 100 to remain in place on top of the ESM 200. FIG. 1 and FIG. 2 show one example of such a ridge and groove configuration 105 at the corners of the welding power source 100 and the ESM 200. In another embodiment, the bottom portion of the welding power source 100 and the top portion of the ESM 200 may include a configuration of interlocking fasteners to hold the welding power source 100 in place on top of the ESM 200. Other configurations are possible as well, in accordance with other embodiments. For example, in one embodiment, the ESM 200 may rest on top of the welding power source 100. In another embodiment, the ESM 200 may simply be placed next to (e.g., to the side of) the welding power source 100.

Referring to at least FIG. 1 and FIG. 2, the ESM 200 includes a positive direct current (DC) output power connector 212 and a negative DC output power connector 214 configured to be connected to respective electrical DC power cables 250 and 252 to operatively connect to respective connectors 112 and 114 on the welding power source 100. The ESM 200 includes an alternating current (AC) input power connector 205 configured to connect to an electrical grid or a renewable energy source via an AC input power cable 201. The ESM 200 also includes an AC output power connector 207 configured to connect to a corresponding AC input power connector 107 on the welding power source 100 via an AC power cable 209. In this way, AC input power from the electrical grid or a renewable energy source is passed from the ESM 200 to the welding power source 100. In accordance with an alternative embodiment, AC input power first comes into the welding power source from the electrical grid or a renewable energy source and is then passed to the ESM. The electrical grid may be, for example, a local grid, a regional grid, or a national grid. The electrical grid may be a conventional grid or a smart grid. Types of renewable energy sources may include solar, wind, hydroelectric, biomass, or geothermal, for example.

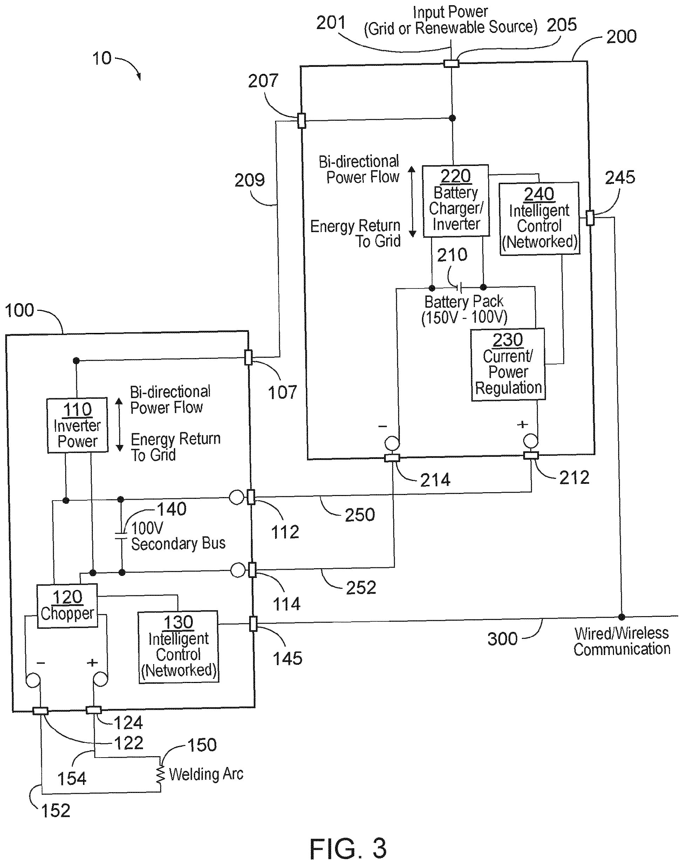

The welding power source 100 includes a first welding output power connector 122 configured to operatively connect to a first welding output power cable 152. The welding power source 100 also includes a second welding output power connector 124 configured to operatively connect to a second welding output power cable 154. The welding output power cables are configured to connect to a welding electrode and a work piece, as is known in the art, such that a welding arc 150 (see FIG. 3) may be established between the electrode and the work piece during a welding operation.

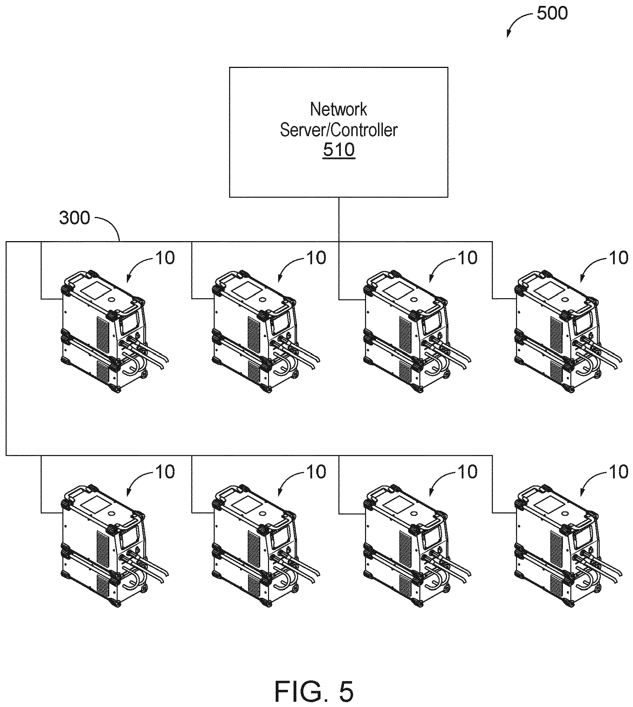

The welding power source 100 includes a communication link connector 145 and the ESM 200 includes a communication link connector 245. The welding power source 100 and the ESM 200 can communicate with each other via a communication link to which the welding power source 100 and the ESM 200 are connected via the respective communication link connectors 145 and 245. The communication link may be configured to employ a wired digital communication technology (e.g., ArcLink^{™}, Ethernet), in accordance with one embodiment. In another embodiment, the communication link may be configured to employ a wireless digital communication technology (e.g., WiFi or Bluetooth^{®}). In yet another embodiment, the communication link may be configured to employ a wired analog communication technology (e.g., optical fiber, twisted pair, coaxial cable). In accordance with one embodiment, the communication link includes a computer-based communication network as discussed later herein with respect to at least FIG. 5.

In an alternative embodiment, the communication link includes the electrical DC power cables 250 and 252 operatively connected between the ESM 200 and the welding power source 100. In another alternative embodiment, the communication link includes the AC power cable 209. A modulated data signal can be transmitted across power cables, in accordance with various embodiments, for communication purposes. U.S. Patent No. 10,471,532 issued on November 12, 2019 is incorporated herein by reference in its entirety and provides an example of communicating between devices over power cables.

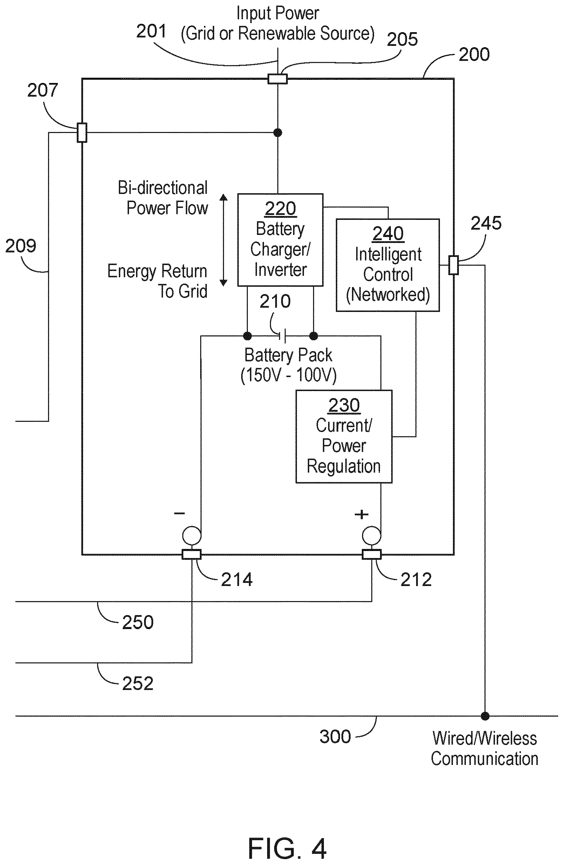

FIG. 3 illustrates a schematic block diagram of one embodiment of the welding system 10 of FIG. 1 and FIG. 2 having one embodiment of the energy storage module (ESM) 200 of FIG. 1 and FIG. 2 operatively connected to one embodiment of the welding power source 100 of FIG. 1 and FIG. 2. FIG. 4 illustrates a schematic block diagram of one embodiment of the energy storage module (ESM) 200 of FIGS. 1-3.

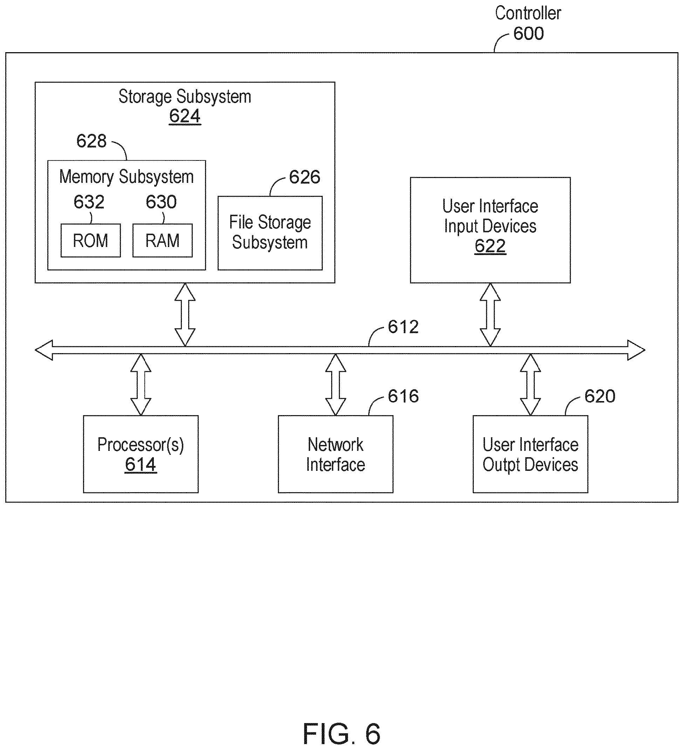

Referring to FIG. 3 and FIG. 4, the ESM 200 includes a battery pack 210, an integrated battery charging circuitry and inverter circuitry 220, a regulation circuitry 230, and a controller 240. In accordance with another embodiment, the battery charging circuitry may be separate from (not integrated with) the inverter circuitry. In accordance with one embodiment, the controller 240 controls the functioning of the ESM 200. In one embodiment, the controller 240 takes the form of the controller 600 in FIG 6. The controller 240 is configured to be operatively connected to a communication link 300 to communicate with the welding power source 100 via the communication link 300 when the welding power source 100 is operatively connected to the ESM 200. Again, the communication link 300 may be based on, for example, one of the communication link technologies discussed above herein.

The battery pack 210 is configured to store electrical energy and output DC electrical power to be used by the welding power source 100 under the control of the controller 240. The output DC electrical power from the battery pack 210 supplements or replaces electrical input power provided to the welding power source 100 and originating from an electrical grid and/or a renewable energy source during a welding operation. Energy storage technology of the ESM 200 can range from lithium ion batteries, super capacitors to lithium ion capacitors, in accordance with some embodiments. Other existing energy storage technologies are possible as well. Energy storage technology not developed as of yet may also be leveraged by an ESM in the future.

The regulation circuitry 230 regulates the DC electrical power (e.g., current and/or voltage) output from the battery pack 210. In one embodiment, the controller 240 controls the regulation circuitry 230 based on identification data received over the communication link 300 from the welding power source 100. The DC electrical power is regulated by the regulation circuitry 230 to be compatible with the welding power source 100 connected to the ESM 200. In this manner, the ESM 200 may be operatively connected to any one of a number of different types of welding power sources, and the regulation circuitry 230 of the ESM 200 will ensure compatibility. In accordance with one embodiment, the regulation circuitry 230 ensures compatibility by establishing a power limit associated with the welding power source 100 based on the identification data. In accordance with another embodiment, the regulation circuitry 230 ensures compatibility by establishing a current limit associated with the welding power source 100 based on the identification data. In accordance with yet another embodiment, the regulation circuitry 230 ensures compatibility by establishing a voltage limit associated with the welding power source 100 based on the identification data.

In one embodiment, the controller 240 is configured to sense and determine which type of welding power source 100 the ESM 200 is connected to via the communication link 300. In another embodiment, the regulation circuitry 230 is configured to sense which type of welding power source 100 the ESM 200 is connected to via the DC power cables 250 and/or 252, and pass sensing information to the controller 240. The sensing by the controller 240 or the regulation circuitry 230 may be a type of voltage level sensing, a type of current level sensing, or a type of impedance level sensing, in accordance with some embodiments. Other types of sensing may be possible as well, in accordance with other embodiments. In these ways, determining the type of welding power source that an ESM is connected to does not have to rely on identification data, as such, from the welding power source. For example, in one embodiment, once the type of welding power source 100 connected is determined based on such sensing, the controller 240 of the connected ESM 200 can reconfigure a communication protocol and method to be compatible with the welding power source 100. Furthermore, in lieu of relying on identification data, the controller 240 can control the regulation circuitry 230 to be compatible with the welding power source 100 based on the type of welding power source 100 determined from the sensing, in accordance with one embodiment.

The battery charging circuitry portion (of the integrated battery charging circuitry and inverter circuitry 220) is configured to accept the electrical input power from the electrical grid and/or the renewable energy source and provide the electrical energy to the battery pack 210, under control of the controller 240, to charge the battery pack 210. Whereas, the inverter circuitry portion (of the integrated battery charging circuitry and inverter circuitry 220) is configured to accept the electrical energy stored in the battery pack 210 and convert the electrical energy to grid electrical power, under the control of the controller 240. The grid electrical power can then be provided back to the electrical grid.

The welding power source 100 is configured to provide welding output power during a welding operation. The welding power source 100 includes inverter circuitry 110 and chopper circuitry 120, similar to such circuitry that is known in the art. The welding power source 100 also includes a controller 130. In accordance with one embodiment, the controller 130 controls the functioning of the welding power source 100 and supports communication over the communication link 300 to/from the welding power source 100. In one embodiment, the controller 130 takes the form of the controller 600 described herein with respect to FIG 6. With respect to some examples of welding power source technology, U.S. Patent No. 9,855,620 issued on January 2, 2018 is incorporated herein by reference in its entirety, and U.S. Patent No. 10,668,551 issued on June 2, 2020 is incorporated herein by reference in its entirety.

The welding power source 100 also includes a DC power bus 140. The DC power bus 140 is configured to accept the DC electrical power from the ESM 200 (over the electrical DC power cables 250 and 252) to supplement or replace the electrical input power provided to the welding power source 100 from an electrical grid and/or a renewable energy source during a welding operation. In one embodiment, the DC power bus 140 is a secondary power bus on a secondary side of the power conversion circuitry of the welding power source 100. For example, in one embodiment, the power bus 140 is configured as a secondary 100 volt DC power bus and is integrated into and is controlled with a third stage chopper circuitry of a three stage inverter power conversion circuitry of the welding power source 100.

Other configurations of a DC power bus for accepting the DC electrical power from the ESM 200 are possible as well, in accordance with other embodiments. For example, in one embodiment, a DC power bus can be supported on a primary side of a two stage system with a boost converter. In inverter topologies, AC is used to create a DC power bus that feeds the switching mode power supply transistors. The DC power bus can be created via a full diode bridge configured to pass a DC supply.

As shown in FIG. 3 and FIG. 4, the electrical input power provided to the welding power source 100 from an electrical grid and/or a renewable energy source comes into to the ESM 200 over the AC input power cable 201 and is passed to the welding power source 100 over the AC power cable 209, in accordance with one embodiment. In an alternative embodiment, the electrical input power provided to the welding power source from an electrical grid and/or a renewable energy source comes first into the welding power source and is then passed to the ESM.

In one embodiment, the supplementing or replacing of the electrical input power provided to the welding power source 100 is under the control of the controller 230 of the ESM 200. In another embodiment, the supplementing or replacing of the electrical input power provided to the welding power source 100 is under the control of the controller 130 of the welding power source 100. In yet another embodiment, the supplementing or replacing of the electrical input power provided to the welding power source 100 is under the coordinated control of both the controller 130 of the welding power source 100 and the controller 230 of the ESM 200.

FIG. 5 illustrates a schematic diagram of a networked configuration 500 of multiple welding systems 10 each having a welding power source 100 and a corresponding energy storage module (ESM) 200. In the networked configuration 500 of FIG. 5, the communication link 300 is a computer-based communication link and the networked configuration 500 is a computer-based communication network. The networked configuration 500 includes a network server/controller 510 that controls the overall networked configuration 500. The networked configuration 500 may be a local area network (LAN), a wide area network (WAN), or an internet-based network, for example. The networked configuration may exist in a single facility (such as a manufacturing facility) or may exist across two or more facilities, in accordance with various embodiments.

In one embodiment, each welding system 10 communicates with the network server/controller 510 over the communication link 300. Communication between any two or more of the multiple welding systems 10 goes through the network server/controller 510. In another embodiment, direct communication between the welding systems 10 over the communication link 300 is also possible. In one embodiment, the network server/controller 510 takes the form of the controller 600 described herein with respect to FIG 6. Communication over the communication link 300 may be via one or more of a wired digital communication technique, a wireless digital communication technique, or a wired analog communication technique, in accordance with various embodiments. For example, networking technologies may be based on power line communication, ArcLink^{®}, Ethernet, WiFi, or Bluetooth^{®}).

In one embodiment, the systems 10 are networked and integrated with enterprise level software and IT solutions for controlling, scheduling, predicting, and modifying welding operations and the use of supplemental power during times of peak energy consumption. Similarly, the integration of software control of the power sources and ESMs allow for adjustment of how supplemental power is delivered from the ESM based on utility conditions and welding output requirements. Idle systems 10 with extra energy in their associated ESMs can be used to return energy to the electrical grid or industrial network during peak energy consumption times while other systems 10 are welding. Thus, industrial customers can realize a reduction in total energy consumption through the coordinated operation of all welding systems 10 via the networked configuration 500. With respect to some examples of networking technologies and monitoring and controlling energy usage, U.S. Patent No. 6,486,439 issued on November 26, 2002 is incorporated herein by reference in its entirety, U.S. Patent No. 6,624,388 issued on September 23, 2003 is incorporated herein by reference in its entirety, and U.S. Patent No. 7,208,697 issued on April 24, 2007 is incorporated herein by reference in its entirety.

In an alternative embodiment, communication between multiple welding systems 10 can occur over the power lines of an AC power network that each welding power source is plugged into via the AC input power cable 201 of each welding system 10. For example, a modulated data signal containing information to be communicated can be superimposed on the AC power signal carried by the AC power network. Other methods of communicating over power lines are possible as well. U.S. Patent No. 5,257,006 issued on October 26, 1993 is incorporated herein by reference in its entirety and provides an example of communication over power lines.

FIG. 6 illustrates a block diagram of an example embodiment of a controller 600 that can be used in the welding power source 100 of FIGS. 1-3 and/or the energy storage module (ESM) 200 of FIGS. 1-4. For example, in accordance with one embodiment, the controller 600 (or a least portions thereof) serves as the controller 130 in FIG. 3. Similarly, the controller 600 (or a least portions thereof) serves as the controller 240 in FIG. 3 and FIG. 4 herein. In one embodiment, the controller 600 (or at least portions thereof) serves as the network server controller 510 of FIG. 5.

Referring to FIG. 6, the controller 600 includes at least one processor 614 (e.g., a microprocessor, a central processing unit, a graphics processing unit) which communicates with a number of peripheral devices via bus subsystem 612. These peripheral devices may include a storage subsystem 624, including, for example, a memory subsystem 628 and a file storage subsystem 626, user interface input devices 622, user interface output devices 620, and a network interface subsystem 616. The input and output devices allow user interaction with the controller 600. Network interface subsystem 616 provides an interface to outside networks and is coupled to corresponding interface devices in other devices.

User interface input devices 622 may include a keyboard, pointing devices such as a mouse, trackball, touchpad, or graphics tablet, a scanner, a touchscreen incorporated into the display, audio input devices such as voice recognition systems, microphones, and/or other types of input devices. In general, use of the term "input device" is intended to include all possible types of devices and ways to input information into the controller 600 or onto a communication network.

User interface output devices 620 may include a display subsystem, a printer, or non-visual displays such as audio output devices. The display subsystem may include a cathode ray tube (CRT), a flat-panel device such as a liquid crystal display (LCD), a projection device, or some other mechanism for creating a visible image. The display subsystem may also provide non-visual display such as via audio output devices. In general, use of the term "output device" is intended to include all possible types of devices and ways to output information from the controller 600 to the user or to another machine or computer system.

Storage subsystem 624 stores programming and data constructs that provide some or all of the functionality described herein. For example, computer-executable instructions and data are generally executed by processor 614 alone or in combination with other processors. Memory 628 used in the storage subsystem 624 can include a number of memories including a main random access memory (RAM) 630 for storage of instructions and data during program execution and a read only memory (ROM) 632 in which fixed instructions are stored. A file storage subsystem 626 can provide persistent storage for program and data files, and may include a hard disk drive, a solid state drive, a floppy disk drive along with associated removable media, a CD-ROM drive, an optical drive, or removable media cartridges. The computer-executable instructions and data implementing the functionality of certain embodiments may be stored by file storage subsystem 626 in the storage subsystem 624, or in other machines accessible by the processor(s) 614.

Bus subsystem 612 provides a mechanism for letting the various components and subsystems of the controller 600 communicate with each other as intended. Although bus subsystem 612 is shown schematically as a single bus, alternative embodiments of the bus subsystem may use multiple buses.

The controller 600 can be of varying types. Due to the ever-changing nature of computing devices and networks, the description of the controller 600 depicted in FIG. 6 is intended only as a specific example for purposes of illustrating some embodiments. Many other configurations of the controller are possible, having more or fewer components than the controller 600 depicted in FIG. 6.

While the disclosed embodiments have been illustrated and described in considerable detail, it is not the intention to restrict or in any way limit the scope of the appended claims to such detail. It is, of course, not possible to describe every conceivable combination of components or methodologies for purposes of describing the various aspects of the subject matter. Therefore, the disclosure is not limited to the specific details or illustrative examples shown and described. Thus, this disclosure is intended to embrace alterations, modifications, and variations that fall within the scope of the appended claims, which satisfy the statutory subject matter requirements of 35 U.S.C. §101. The above description of specific embodiments has been given by way of example. From the disclosure given, those skilled in the art will not only understand the general inventive concepts and attendant advantages, but will also find apparent various changes and modifications to the structures and methods disclosed. It is sought, therefore, to cover all such changes and modifications as fall within the spirit and scope of the general inventive concepts, as defined by the appended claims, and equivalents thereof.

## Claims

1. An energy storage module for connecting to a welding machine or a cutting machine, the energy storage module comprising:
a controller configured to be operatively connected to a communication link to communicate with at least a welding machine or a cutting machine via the communication link when the welding machine or the cutting machine is operatively connected to the energy storage module;
a battery pack configured to store electrical energy and output direct current (DC) electrical power to be used by the welding machine or the cutting machine, under control of the controller, to supplement or to replace electrical input power provided to the welding machine or the cutting machine from at least one of an electrical grid or a renewable energy source during a welding operation or a cutting operation; and
regulation circuitry configured to regulate the direct current (DC) electrical power output from the battery pack, where the controller is configured to control the regulation circuitry based on, at least in part, identification data received over the communication link from the welding machine or the cutting machine to regulate the direct current (DC) electrical power to be compatible with the welding machine or the cutting machine operatively connected to the energy storage module.

2. The energy storage module of claim 1, further comprising battery charging circuitry configured to accept the electrical input power from at least one of the electrical grid or the renewable energy source and provide the electrical energy to the battery pack, under control of the controller, to charge the battery pack.

3. The energy storage module of claim 1 or 2, further comprising inverter circuitry configured to accept the electrical energy stored in the battery pack and convert the electrical energy to grid electrical power, under control of the controller, where the grid electrical power can be provided back to the electrical grid.

4. The energy storage module of any of the previous claims, wherein the controller is configured to communicate with at least the welding machine or the cutting machine over the communication link via a wired and/or wireless digital communication technique or via a wired analog communication technique.

5. The energy storage module of any of the previous claims, wherein the communication link includes a computer-based communication network and/or electrical power cables operatively connected between the energy storage device and the welding machine or the cutting machine.

6. The energy storage module of any of the previous claims, further comprising a positive direct current (DC) output power connector and a negative direct current (DC) output power connector configured to be connected to respective direct current (DC) power cables to operatively connect to respective power connectors on the welding machine or the cutting machine.

7. The energy storage module of any of the previous claims, further comprising:
- an alternating current (AC) input power connector configured to connect to the electrical grid or the renewable energy source; and/or
- an alternating current (AC) output power connector configured to connect to the welding machine or the cutting machine.

8. The energy storage module of any of the previous claims, wherein the regulation circuitry is configured to regulate the direct current (DC) electrical power to be compatible with the welding machine or the cutting machine at least by establishing a power limit associated with the welding machine or the cutting machine.

9. A welding system, the welding system comprising:
a welding power source configured to provide welding output power during a welding operation; and
an energy storage module, configured to be operatively connected to the welding power source, wherein the energy storage module includes:
a controller configured to be operatively connected to a communication link to communicate with at least the welding power source via the communication link when the welding power source is operatively connected to the energy storage module;
a battery pack configured to store electrical energy and output direct current (DC) electrical power to be used by the welding power source, under control of the controller, to supplement or to replace electrical input power provided to the welding power source from at least one of an electrical grid or a renewable energy source during the welding operation; and
regulation circuitry configured to regulate the direct current (DC) electrical power output from the battery pack, where the controller is configured to control the regulation circuitry based on, at least in part, identification data received over the communication link from the welding power source to regulate the direct current (DC) electrical power to be compatible with the welding power source operatively connected to the energy storage module.

10. The welding system of claim 9, wherein the energy storage module further comprises battery charging circuitry configured to accept the electrical input power from at least one of the electrical grid or the renewable energy source and provide the electrical energy to the battery pack, under control of the controller, to charge the battery pack.

11. The welding system of claim 9 or 10, wherein the energy storage module further comprises inverter circuitry configured to accept the electrical energy stored in the battery pack and convert the electrical energy to grid electrical power, under control of the controller, where the grid electrical power can be provided back to the electrical grid.

12. The welding system of any of the claims 9-11, wherein the welding power source and the energy storage module are configured to communicate over the communication link via at least one of a wired digital communication technique, a wireless digital communication technique, or a wired analog communication technique.

13. The welding system of any of the claims 9-12, further comprising a positive direct current (DC) power cable and a negative direct current (DC) power cable configured to be connected between the energy storage module and the welding power source to provide the direct current (DC) electrical power from the energy storage module to the welding power source.

14. The welding system of any of the claims 9-13, further comprising:
- an alternating current (AC) input power cable configured to connect the energy storage module to the electrical grid or the renewable energy source; and/or
an alternating current (AC) output power cable configured to connect the energy storage module to the welding power source to provide alternating current (AC) input power from the energy storage module to the welding power source.

15. The welding system of any of the claims 9-14, wherein the regulation circuitry of the energy storage module is configured to regulate the direct current (DC) electrical power to be compatible with the welding power source at least by establishing a power limit associated with the welding power source.
